# EUROPEAN PATENT APPLICATION

(11) **EP 2 549 768 A2**
(43) Date of publication of application: **23.01.2013**
(21) Application number: 12162724.4
(22) Date of filing: 30.03.2012
(51) Int. Cl.: H04N 13/04, H04N 13/00

(54) **3D display apparatus and content displaying method thereof**

(30) Priority: 21.07.2011 KR 20110072695
(71) Applicant: Samsung Electronics Co., Ltd., Suwon-si, Gyeonggi-do, 443-742 (KR)
(72) Inventor: Lee, Dae-bong, Gyeonggi-do (KR)
(74) Representative: Bruce, Alexander Richard Henry

(57) **Abstract**

A content processing method and a three dimensional (3D) image processing apparatus are provided. The content processing method includes: processing a video signal to be displayed on a screen; processing an audio signal corresponding to the video signal to be output in synchronization with the video signal on the screen; and individually controlling a 3D effect of a subtitle to be displayed on the screen according a loudness level of the audio signal.

## Description

The present invention relates to a three dimensional (3D) display apparatus and a content displaying method thereof. More particularly, apparatuses and methods consistent with exemplary embodiments relate to a 3D display apparatus, which provides content along with subtitles in a 3D image, and a content displaying method using the same.

Recently, advances in electronic appliances have popularized devices providing three dimensional (3D) stereoscopic images and various contents according thereto, and thus allowed general users to easily watch the 3D stereoscopic images even at home.

As a result, users watch various contents to which 3D effects are added and thus observe more realistic contents.

Moreover, due to the rapid development in high-speed communications networks and the like, contents in foreign languages have become more readily available. In the case of contents made in foreign languages, images are provided along with subtitles or captions to help viewers understand better.

Also, even in the case of contents in native languages as well as the contents in foreign languages, images may be provided along with subtitles or captions.

Accordingly, when providing the contents with subtitles in the 3D stereoscopic images, there is a need for methods capable of providing more efficient and realistic 3D stereoscopic images.

Exemplary embodiments overcome the above disadvantages and other disadvantages not described above. Also, an exemplary embodiment is not required to overcome the disadvantages described above, and an exemplary embodiment may not overcome any of the problems described above.

Aspects of one or more exemplary embodiments provide a 3D display apparatus, which can individually adjust 3D effects of captions or subtitles displayed on a screen according to loudness levels of an audio signal included in a content signal, and a content displaying method using the same.

According to an aspect of an exemplary embodiment, there is provided a content processing method of a 3D image processing apparatus, the method including: processing a video signal to be displayed on a screen; processing an audio signal corresponding to the video signal to be output in synchronization with the video signal on the screen; and individually controlling a 3D effect of a subtitle to be displayed on the screen according a loudness level of the audio signal.

In this case, the individually changing may include, if a loudness of a phonated content in the audio signal exceeds a predetermined critical range, adaptively increasing a depth information of a subtitle corresponding to the phonated content according to a difference between the loudness of the phonated content and the predetermined critical range, and if under the predetermined critical range, adaptively decreasing the depth information of the subtitle corresponding to the phonated content according to the difference between the loudness of the phonated content and the predetermined critical range.

Also, the processing the video signal may include displaying an object having a predetermined 3D effect on the screen, and if a loudness of a phonated content that the object phonates is in the predetermined critical range, displaying a subtitle of the phonated content that the object phonates along with the object in the same 3D effect as that of the object on the screen.

The individually changing may include, if a loudness of a phonated content in the audio signal exceeds a predetermined critical range, increasing a depth information of a subtitle corresponding to the phonated content to a predetermined maximum value, and if under the predetermined critical range, decreasing the depth information of the subtitle corresponding to the phonated content to a predetermined minimum value.

Also, the processing the video signal may include, if a plurality of objects having different 3D effects is displayed on the screen, displaying 3D effects of subtitles corresponding to phonated contents that the objects phonate, respectively, to be different, depending on the 3D effects of the respective objects.

According to an aspect of another exemplary embodiment, there is provided a 3D image processing apparatus, including: an image processing unit to process video and audio signals; an output unit to display the processed video signal on a screen and to output the processed audio signal; a control unit to control the output unit to output the audio signal in synchronization with the video signal on the screen and to individually control a 3D effect of a subtitle displayed on the screen according a loudness level of the audio signal.

In this case, if a loudness of a phonated content in the audio signal exceeds a predetermined critical range, the control unit may adaptively increase a depth information of a subtitle corresponding to the phonated content according to a difference between the loudness of the phonated content and the predetermined critical range, and if under the predetermined critical range, adaptively decrease the depth information of the subtitle corresponding to the phonated content according to the difference between the loudness of the phonated content and the predetermined critical range.

Also, the control unit may control to display an object having a predetermined 3D effect on the screen, and if a loudness of a phonated content that the object phonates is in the predetermined critical range, to display a subtitle of the phonated content where the object phonates along with the object in the same 3D effect as that of the object on the screen.

If a loudness of a phonated content in the audio signal exceeds a predetermined critical range, the control unit may increase a depth information of a subtitle corresponding to the phonated content to a predetermined maximum value, and if under the predetermined critical range, decrease the depth information of the subtitle corresponding to the phonated content to a predetermined minimum value.

Also, if a plurality of objects having different 3D effects is displayed on the screen, the control unit may control to display 3D effects of subtitles corresponding to phonated contents that the objects phonate, respectively, to be different, depending on the 3D effects of the respective objects.

According to the various aspects of exemplary embodiments as described above, since the 3D effects of the subtitles displayed on the screen are individually changed according the loudness levels of the audio signal, more dynamic stereoscopic images can be provided to users.

The above and/or other aspects will become more apparent by describing certain exemplary embodiments with reference to the accompanying drawings, in which:
FIG. 1 is a view showing a system providing a content displaying method according to an exemplary embodiment;
FIG. 2 is a block diagram showing a configuration of a 3D display apparatus according to an exemplary embodiment;
FIG. 3 is a block diagram showing a detailed configuration of a 3D display apparatus according to an exemplary embodiment;
FIGS. 4A to 6 are views for explaining a state where a 3D subtitle image is overlapped and displayed on a 3D content image according to an exemplary embodiment; and
FIG. 7 is a flowchart for explaining a content displaying method of a 3D display apparatus according to an exemplary embodiment.

Exemplary embodiments will now be described in greater detail below with reference to the accompanying drawings.

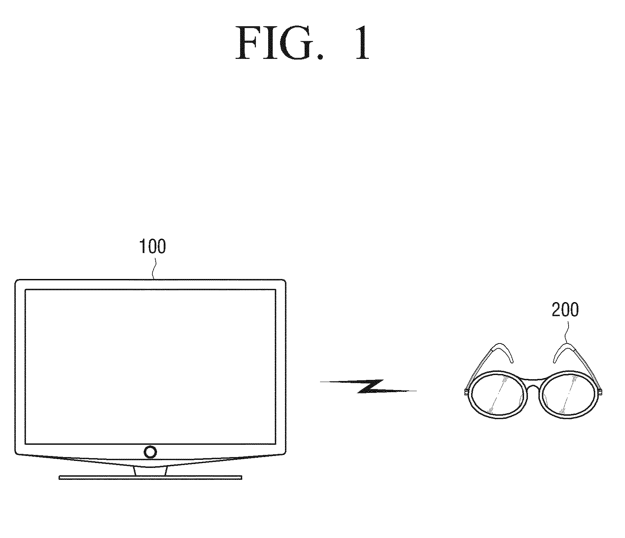

FIG. 1 is a view showing a system providing a content displaying method according to an exemplary embodiment. As shown in FIG. 1, the system includes a 3D (stereoscopic) display apparatus 100 for displaying a 3D image on a screen, and 3D glasses 200 for watching the 3D image.

The 3D display apparatus 100 may output a content image, and overlap an additional image, e.g. a corresponding caption or subtitle on the content image to display on the screen provided thereon.

To be specific, the 3D display apparatus 100 may overlap a left eye subtitle image on a left eye content image included in a content signal and a right eye subtitle image on a right eye content image included in the content signal, and alternately display the overlapped left eye image and the overlapped right eye image, thereby providing a 3D stereoscopic image to a user.

In this case, the 3D display apparatus 100 may adjust a disparity between the left eye subtitle image and the right eye subtitle image according to a size, characteristic, or metric, for example, a loudness level of an audio signal included in the content signal, thus to individually place 3D effects on the subtitles displayed on the screen.

Accordingly, the user can be provided with the subtitles three-dimensionally changed according the loudness levels of the audio signal, thereby watching more dynamic stereoscopic images.

The 3D glasses 200 may be embodied by active type shutter glasses. The shutter glass type is a 3D glasses type that allows a viewer to feel an impression of depth by combining images viewed from different angles by synchronizing an on-off action of left eye and right eye glasses in the 3D glasses with left image and right image frames reproduced by the 3D display apparatus 100. In other words, the 3D stereoscopic images are viewed as the left and right eye glasses of the 3D glasses 200 are selectively and alternately opened and closed according to left and right image sync signals of the 3D display apparatus 100. While the present exemplary embodiment is described with reference to active type shutter glasses, it is understood that one or more other exemplary embodiments are not limited thereto. For example, one or more other exemplary embodiments may be applied to a 3D display system employing passive type glasses (e.g., with polarizing lenses or filters) or employing a glasses-free 3D display. Moreover, while the present exemplary embodiment is described with reference to an alternate display of left eye and right eye image frames, it is understood that one or more other exemplary embodiments are not limited thereto. For example, one or more other exemplary embodiments may be applied to a 3D display system that simultaneously displays left eye and right eye image frames.

Moreover, the system providing the content displaying method according to the present exemplary embodiment may further include cameras (not shown) for creating the 3D image.

The cameras (not shown), as a kind of photographing apparatuses for creating the 3D image, create a left eye image photographed with a view corresponding to a left eye of the user and a right eye image photographed with a view corresponding to a right eye of the user. That is, the 3D image includes the left eye image and the right eye image, which are alternatively provided to the left eye and right eye of the user, thereby allowing the user to feel the 3D effect by a binocular disparity.

For this, the cameras (not shown) may include a left eye camera or lens for creating the left eye image and a right eye camera or lens for creating the right eye image. A space between the left eye camera or lens and the right eye camera or lens is set considering a spaced distance between the both eyes of humans.

The cameras (not shown) transmit the photographed left eye image and the photographed right eye image to the 3D display apparatus 100. Particularly, the left eye image and the right eye image, which are transmitted from the cameras (not shown) to the 3D display apparatus 100, may be transmitted in a format in which only one of the left eye image and the right eye image is included in one frame or a format in which both the left eye image and the right eye image are included in one frame.

The cameras (not shown) may determine one format among various formats of the 3D image in advance, and create a 3D image according to the determined format to transmit the created 3D image to the 3D display apparatus 100.

Moreover, it is understood that in one or more other exemplary embodiments, the 3D image may be received from any source including a storage medium (e.g., an optical recording medium), from a broadcasting station, from a network (e.g., the Internet). Furthermore, according to one or more other exemplary embodiments, the 3D display apparatus may receive a two dimensional (2D) image and may convert the 2D image using a predetermined algorithm (e.g., an algorithm that identifies objects and a background in the 2D image frame and determines and assigns depths to the identified objects and background) or using predetermined depth values.

While in FIG. 1, the 3D display apparatus 100 is shown as a 3D television (TV), it is understood that this is only an exemplary embodiment, and one or more other exemplary embodiments are not limited thereto. For example, according to one or more other exemplary embodiments, it is possible for the 3D display apparatus 100 to be embodied by any other apparatus, which can display the 3D image, such as a digital TV, a mobile communication terminal, a mobile phone, a personal digital assistant (PDA), a smart phone, a digital multimedia broadcasting (DMB) phone, an MP3 player, an audio appliance, a portable television, a digital camera, etc. Moreover, aspects of one or more other exemplary embodiments may be applied to an image processing apparatus (e.g., a set-top box, a server, a broadcasting station, etc.) that processes an image signal and outputs the processed image signal to be displayed by an external device.

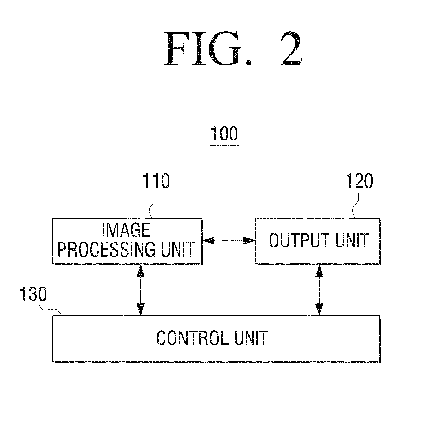

FIG. 2 is a block diagram showing a configuration of a 3D display apparatus 100 according to an exemplary embodiment. Referring to FIG. 2, the 3D display apparatus 100 includes an image processing unit 110, an output unit 120, and a control unit 130.

The image processing unit 110 performs a signal processing on at least one of a video signal and an audio signal included in the content signal. To be specific, the image processing unit 110 may perform a signal processing, such as at least one of a video decoding, a video format analysis, a video scaling, an audio decoding and the like to the video signal and audio signal included in the content signal.

The output unit 120 may display the processed video signal on the screen, and output the processed audio signal. The output unit 120 may be provided with a display part (not shown) for displaying the video signal, and an audio output part (not shown) for outputting the audio signal.

The control unit 130 may output the audio signal in synchronization with the video signal on the screen, and individually change 3D effects of captions or subtitles displayed on the screen according output levels of the audio signal.

To be specific, if a loudness of a phonated (vocalised) voice or sound in the audio signal exceeds a predetermined critical range or value, the control unit 130 may adaptively increase depth information of a subtitle corresponding to a phonated content or sound according to a difference between the loudness of the phonated voice or sound and the predetermined critical range or value. Conversely, if the loudness of the phonated voice or sound is under the predetermined critical range or value, the control unit 130 may adaptively decrease the depth information of the subtitle corresponding to the phonated content or sound according to the difference between the loudness of the phonated voice or sound and the predetermined critical range or value.

Here, the control unit 130 may display an object having a predetermined 3D effect on the screen, and if a loudness of a phonated voice where the object phonates is in the predetermined critical range, display a subtitle to the phonated voice where the object phonates along with the object in the same 3D effect as that of the object on the screen.

Also, if the loudness of the phonated voice in the audio signal exceeds the predetermined critical range, the control unit 130 may increase the depth information of the subtitle corresponding to the phonated content at a predetermined maximum value, and if under the predetermined critical range, decrease the depth information of the subtitle corresponding to the phonated content at a predetermined minimum value.

On the other hand, if a plurality of objects having different 3D effects is displayed on one screen, the control unit 130 may display 3D effects of the subtitles corresponding to phonated voices where the objects phonate, respectively, to be different, depending on the 3D effects of the respective objects.

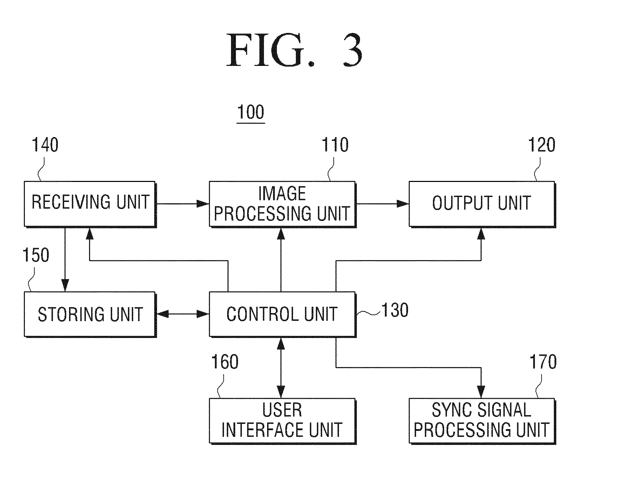

Hereinafter, a 3D display apparatus 100 according to an exemplary embodiment will be explained in more detail with reference to FIG. 3.

FIG. 3 is a block diagram showing a detailed configuration of a 3D display apparatus 100 according to an exemplary embodiment. Referring to FIG. 3, the 3D display apparatus 100 includes an image processing unit 110, an output unit 120, a control unit 130, a receiving unit 140, a storing unit 150, a user interface unit 160, and a sync signal processing unit 170.

The receiving unit 140 receives a broadcasting signal by wire or wirelessly from a satellite or a broadcasting station and demodulates the received signal. For this, the receiving unit 140 may be provided with at least one tuner. In some cases, the receiving unit 140 may be provided with a plurality of tuners to simultaneously receive broadcasting signals at plural channels.

Further, the receiving unit 140 may divide the broadcasting signal into a video signal, an audio signal and additional information.

Moreover, the receiving unit 140 may be connected to an external source, such as a camera, a digital video disc (DVD) player, a Blu-ray player, a media server, and the like to receive a content signal including the video signal, the audio signal and the additional information therefrom. In this case, the receiving unit 140 may be connected to the external source wirelessly, or by wire through an interface, such as S-Video, Component, Composite, D-sub, DVI, HDMI, or the like.

Here, each of the broadcasting signals received through certain channels and the signals inputted from the outer sources will be hereinafter referred as a content signal, and the content signal includes a video signal, an audio signal and additional information for certain content.

The video signal included in the content signal may include at least one of 2D images and 3D images for content.

Further, the additional information may include captions or subtitles corresponding to relevant content images and time information displayed in the subtitles. Moreover, if the video signal includes the 3D images, the additional information may further include information for 3D effects of each of objects forming the 3D images. Here, the 3D effect may include a depth value of a relevant object in the 3D image.

Also, the receiving unit 140 may transmit the video signal, the audio signal and the additional information to the image processing unit 110.

Here, the 3D image, as an image including at least one frame, is an image configured so that both the left eye image and the right eye image are included in one image frame or each frame includes the left eye image or the right eye image. In other words, the 3D image is an image created according to one of various 3D formats.

Accordingly, the 3D image received by the receiving unit 140 may be in various formats, for example, a format according to one of a general top-bottom type, a side by side type, a horizontal interleave type, a vertical interleave type or a checker board type, and a sequential frame.

The image processing unit 110 performs signal processing on at least one of the video signal and the audio signal received from the receiving unit 140. To be specific, the image processing unit 110 may perform a signal processing, such as at least one of the video decoding, the format analysis, the video scaling, the audio decoding and the like, to the received video signal and audio signal, to provide a video signal and audio signal capable of being outputted by a display part (not shown) and an audio output part (not shown) provided in the output unit 120 or externally, respectively.

Further, the image processing unit 110 creates a left eye image and a right eye image corresponding to a size of one frame (for example, 1920 x 1080), respectively, by using the format of the 3D image inputted to the receiving unit 140.

For instance, if the format of the 3D image is a format according to the general top-bottom type, the side by side type, the horizontal interleave type, the vertical interleave type or the checker board type, or the sequential frame, the image processing unit 110 creates a left eye image and a right eye image for providing to the user, respectively, by extracting a left eye image portion and a right eye image portion from each image frame and enlargingly scaling or interpolating the extracted left eye image portion and the extracted right eye image portion.

Also, if the format of the 3D image is a format according to a general frame sequence type, the image processing unit 110 extracts a left eye image and a right eye image from each image frame to prepare for display to the user.

Furthermore, information on the format of the inputted 3D image may be included or not included in a 3D image signal.

For instance, if the information on the format of the inputted 3D image is included in the 3D image signal, the image processing unit 110 analyzes the 3D image to extract information on the format therefrom, and processes the received 3D image according to the extracted information. Conversely, if the information on the format of the inputted 3D image is not included in the 3D image signal, the image processing unit 110 processes the received 3D image according to a format inputted by the user, a preset format, a format separately received, or a format determined by a detection process.

Further, according to a certain input of the user to display captions or subtitles, the image processing unit 110 may overlap a 3D subtitle image on the 3D content image and provides the overlapped images to the output unit 120.

To be specific, the image processing unit 110 overlaps a left eye subtitle image on a left eye content image and a right eye subtitle image on a right eye content image, and time-shares the overlapped left eye image and the overlapped right eye image to alternately provide the overlapped images to the output unit 120.

For example, the image processing unit 110 transmits the left and right eye images with subtitles to the output unit 120 in a chronological order of 'a left eye image (L1) → a right eye image (R1) → a left eye image (L2) → a right eye image (R2) →...'.

The output unit 120 may display and output the video signal and the audio signal, respectively, which are processed by the image processing unit 110.

Particularly, the output unit 120 alternatively outputs the left and right eye images with subtitles processed by the image processing unit 110 to provide the images to the user.

For this, the output unit 120 may include a display part (not shown), which can output the images. The display part may include components, such as a panel driving part (not shown), a display panel part (not shown), a backlight driving part (not shown), a backlight emitting part (not shown) and the like. For example, the display part may be a liquid crystal display (LCD), an organic light emitting diode (OLED) display, a plasma display, a cathode ray tube (CRT) display, etc.

Further, the output unit 120 may include an audio output part (not shown), such as a speaker, which can output the audio signal.

The control unit 130 controls a general operation of the 3D display apparatus 100 according to a user input or command received from the user interface unit 160 or a preset option.

Particularly, the control unit 130 controls the receiving unit 140 and the image processing unit 110 to receive the 3D image signal, to separate the received 3D image signal into the left eye image and the right eye image, and to scale or interpolate the separated left eye image and right eye image in sizes capable of being displayed on one picture frame, respectively.

In addition, the control unit 130 controls to perform a signal processing, such as an audio decoding, on the received audio signal and to output the signal-processed audio signal in synchronization with the image signal on the screen.

Further, the control unit 130 controls the image processing unit 110 to create the 3D subtitle image and to overlap the 3D subtitle image on the 3D content image to output the overlapped 3D images on the screen.

When creating the 3D subtitle images with, the control unit 130 may individually change 3D effects (e.g. apparent depth) of the subtitles displayed on the screen according to a size, characteristic, or metric, for example, loudness levels, of the audio signal.

Here, in the 3D image, the 3D effect of the subtitle may be determined by depth information (a depth value) representing an impression of depth, which corresponds to a position in forward-backward direction, that is, in viewer's gaze direction. The depth information may be determined by the disparity between the left eye subtitle image and the right eye subtitle image of the 3D subtitle image.

Accordingly, the control unit 130 can adjust the 3D effects of the subtitles by adjusting the disparity between the left eye subtitle image and the right eye subtitle image of each of the 3D subtitle images.

In order to do this, the control unit 130 detects information on time or image frame at which captions or subtitles are to be displayed, from the additional information provided, for example, by the receiving unit 140.

Here, the captions or subtitles may be in a file form, such as smi, idx, sub, srt, psb, ssa, ass, usf, etc. As an example, subtitles provided in a file form of smi are illustrated below:

```
 <SYNC start=22938><P Class=KRCC>
 Today, it's hot, isn't it?
 <SYNC start=25781><P Class=KRCC>
 Yes, it is
```

In the example as illustrated above, it is assumed that the subtitle "Today, it's hot, isn't it?" begins to be displayed at 22.983 seconds and the subtitle "Yes it is" begins to be displayed at 25.781 seconds. Based on data included in such additional information, the control unit 130 can detect information on the time at which certain subtitles are to be displayed.

Although in the example as illustrated above, the control unit 130 has been explained as detecting the information on time, this is only an example and it is understood that one or more other exemplary embodiments are not limited thereto. For example, if the additional information includes information on frame number at which relevant captions or subtitles are to be displayed, the control unit 130 may detect frame numbers.

Furthermore, the control unit 130 performs a filtering on the audio signal to extract an audio signal component from the audio signal.

For instance, the control unit 130 may be provided with a band pass filter (not shown), to base the control on a particular frequency band. For example, the control unit 130 can extract a voice signal having a frequency band of 200 Hz to 3000 Hz corresponding to a human voice from the audio signal.

Moreover, the control unit 130 may determine a depth value of a 3D subtitle image according to a loudness of a phonated voice corresponding to a time when a certain subtitle is outputted, in the audio signal.

To be specific, if the loudness of the phonated voice in the audio signal is in a predetermined critical range, the control unit 130 determines depth information of a subtitle corresponding to a phonated content in the same value as that of an object displayed on the screen.

Further, if the loudness of the phonated voice in the audio signal exceeds the predetermined critical range, the control unit 130 may adaptively increase the depth information of the additional image (e.g. subtitle) corresponding to the phonated content according to a difference between the loudness of the phonated voice and the predetermined critical range, and if under the predetermined critical range, adaptively decrease the depth information of the subtitle corresponding to the phonated content according to the difference between the loudness of the phonated voice and the predetermined critical range.

In other words, the control unit 130 may function such, so that the larger the loudness of the phonated voice is than a maximum value of the predetermined critical range, the larger a value of the depth information of the subtitle corresponding to the phonated content is determined relative to the depth information of the object displayed on the screen, and the smaller the loudness of the phonated voice is than a minimum value of the predetermined critical range, the smaller a value of the depth information of the subtitle corresponding to the phonated content is determined than the depth information of the object displayed on the screen.

On the other hand, if the loudness of the phonated voice in the audio signal exceeds the predetermined critical range, the control unit 130 may increase the depth information of the subtitle corresponding to the phonated content at a predetermined maximum value, and if under the predetermined critical range, decrease the depth information of the subtitle corresponding to the phonated content at a predetermined minimum value.

Here, the predetermined maximum value is a value larger than the depth information of the object displayed on the screen, and the predetermined minimum value is a value smaller than the depth information of the object displayed on the screen.

Furthermore, in one or more exemplary embodiments, the user may set the predetermined critical range and the predetermined maximum and minimum values.

As described above, the control unit 130 can determine the depth information of the subtitles in consideration of the depth information of the 3D content images, that is, the respective objects displayed on the screen. According to this, the subtitles having three dimensional effects identical with or different from predetermined corresponding objects can be provided to viewers.

Also, if a plurality of objects having different 3D effects is displayed in one screen, the control unit 130 may display 3D effects of subtitles corresponding to phonated voices where the objects phonate, respectively, to be different, depending on the 3D effects of the respective objects.

In this case, the additional information inputted to the receiving unit 140 may include information on subtitles corresponding to phonated voices where the objects phonate, respectively, which are displayed on the screen.

For instance, it assumed that an object 'A' with depth information of 'a' and an object 'B' with depth information of 'b' are displayed on the screen, a subtitle corresponding to a phonated voice of the object 'A' is "Today, it's hot, isn't it?", and a subtitle corresponding to a phonated voice of the object 'B' is "Yes, it is".

In this case, if all the loudnesses of the phonated voices of the objects 'A' and 'B' are in the predetermined critical range, the control unit 130 determines depth information of the subtitle "Today, it's hot, isn't it?" as 'a' and depth information of the subtitle "Yes, it is" as 'b'.

Also, if all the loudnesses of the phonated voices of the objects 'A' and 'B' exceed the predetermined critical range, the control unit 130 determines the depth information of the subtitle "Today, it's hot, isn't it?" as a value larger than 'a' and depth information of the subtitle "Yes, it is" as a value larger than 'b'.

In the same manner, if all the loudnesses of the phonated voices of the objects 'A' and 'B' are under the predetermined critical range, the control unit 130 determines the depth information of the subtitle "Today, it's hot, isn't it?" as a value smaller than 'a' and depth information of the subtitle "Yes, it is" as a value smaller than 'b'.

Accordingly, even if the plurality of objects is displayed in one screen, the control unit 130 can determine the depth information of the subtitles in consideration of the depth information of the 3D images for content, that is, the respective objects displayed on the screen. Moreover, it is understood that in one or more other exemplary embodiments, a plurality of different predetermined critical ranges may be provided respectively for a plurality of different depth values. For example, in the above-described case, a first predetermined critical range may be provided for object depth information of 'a' and a second predetermined critical range for object depth information of 'b'.

The control unit 130 may create a 3D subtitle image according to changed depth information and overlap the created 3D subtitle image on a 3D content image to output the overlapped images.

To be specific, the control unit 130 may create a right eye image or a left eye image having a disparity from the left eye image or the right eye image of the 3D subtitle image by using the depth information of the certain subtitle changed according to the loudness of the phonated voice.

In other words, the control unit 130 may create the 3D subtitle image to have the disparity larger or smaller than that between a left eye image and a right eye image of the 3D content image having predetermined depth information.

Furthermore, the control unit 130 may control the image processing unit 110 to overlap the created left and right eye subtitle images on the left and right eye content images, respectively.

Although in the exemplary embodiment described above, the control unit 130 has been explained as detecting information on time of the subtitle and creating an additional image having the depth value according to the loudness of the voice signal corresponding to the relevant subtitle, this is only an example and one or more other exemplary embodiments are not limited thereto. For example, in one or more other exemplary embodiments, the control unit 130 can create an additional image by classifying the voice signal into at least one level according to the loudness thereof and applying a depth value predetermined by level.

Also, although in the exemplary embodiment described above, the control unit 130 has been explained as creating an additional image having or comprising the subtitle, this is only an example. In other words, the technical teaching of exemplary embodiments, of course, can be applied to captions, advertising copies, information words or warning labels for consumers, auto transcriptions, and the like, besides the subtitles.

For instance, the control unit 130 according to one or more other exemplary embodiments can determine depth information for an advertising copy to be larger than that of a relevant 3D advertisement image, create a 3D advertising copy image by using a disparity adjusted according thereto, and overlap the created 3D advertising copy image on the relevant 3D advertisement image. In this case, information on the advertising copy for determining the depth information for the advertising copy to be larger than that of the relevant 3D advertisement image may be received from an external source. Although the advertising copy as an example is described, the technical teaching of exemplary embodiments, of course, can be also applied to the captions, the information words or warning labels for consumers, and the like.

The storing unit 150, as a storing medium in which any program used in order to operate the 3D display apparatus 100 are stored, may be embodied by a memory, a hard disk drive (HDD) or the like. For instance, the storing unit 150 may include a ROM to store a program for performing an operation of the control unit 130, and a RAM to temporarily store data generated according to the operation of the control unit 130. In addition, the storing unit 150 may further include a nonvolatile memory, such as a flash memory, an electrically erasable and programmable ROM (EEPROM), etc., to store any reference data.

The user interface unit 160 transmits a user command inputted from an input apparatus, such as a remote controller, an input panel and the like, to the control unit 130.

Here, the input panel may be embodied by a touch screen or key pad form having a touch pad or all sorts of keys, such as function keys, digit keys, special keys, letter keys and the like.

Particularly, the user interface unit 160 may be provided with a specified key button to input a user command for displaying the subtitles. Accordingly, if the user selects the specified key button, the user interface unit 160 can transmit a corresponding signal to the control unit 130 to thus create and output subtitles to which the 3D effects are changed according to the loudness levels of the audio signal.

The sync signal processing unit 170 creates sync signals for alternatively opening a left eye shutter glass and a right eye shutter glass of the 3D glasses 200 (see FIG. 1) in synchronization with display timings of the left eye image and the right eye image, and transmits the created sync signals to the 3D glasses 200 (FIG. 1). This allows the left eye shutter glass and the right eye shutter glass of the 3D glasses 200 (FIG. 1) to be alternately opened and closed, so that in a left eye open timing of the 3D glasses 200 (FIG. 1), the left eye image is displayed on the output unit 120, and in a right eye open timing of the 3D glasses 200 (FIG. 1), the right eye image is displayed on the display unit 130. Here, the sync signals may be transmitted in an infrared form.

The control unit 130 controls the sync signal processing unit 170 to create and transmit the sync signals synchronized with output or display timings of the left eye image and the right eye image.

Furthermore, the 3D glasses 200 (FIG. 1) alternately open and close the left eye shutter glass and the right eye shutter glass according to the sync signals received from the 3D display apparatus 100, thereby allowing the user to watch the left eye image and the right eye image with her or his left and right eyes, respectively.

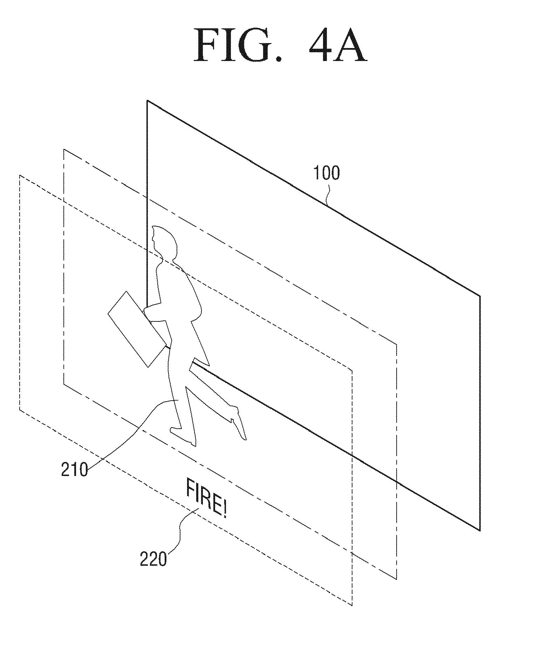

FIGS. 4A to 6 are views for explaining a state where a 3D subtitle image is overlapped and displayed on a 3D content image according to an exemplary embodiment.

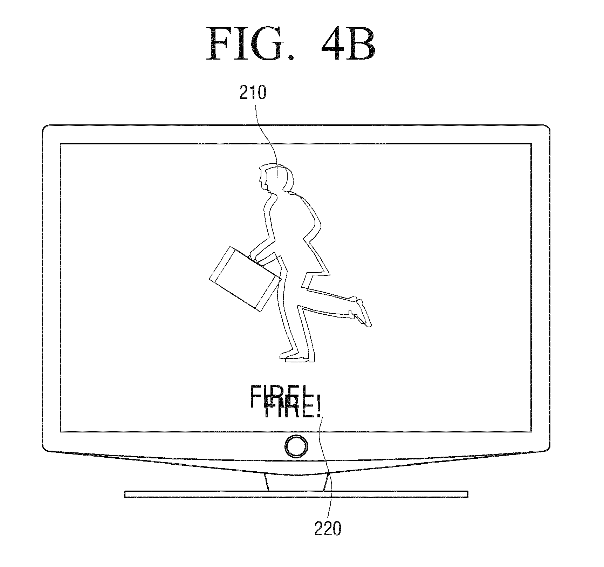

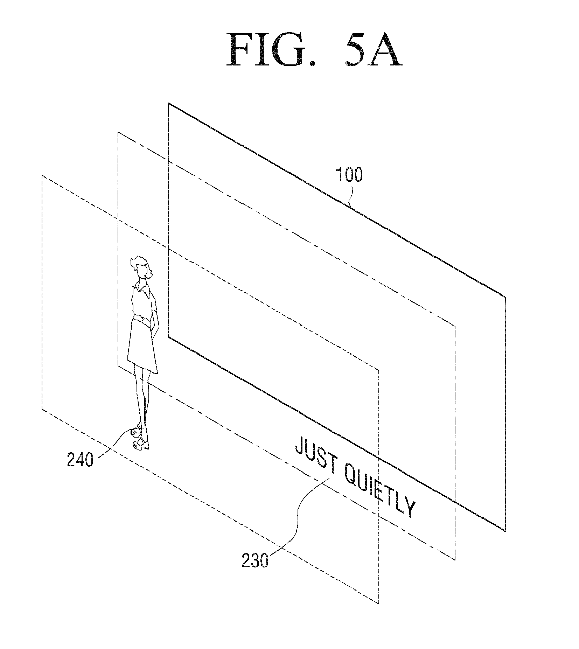

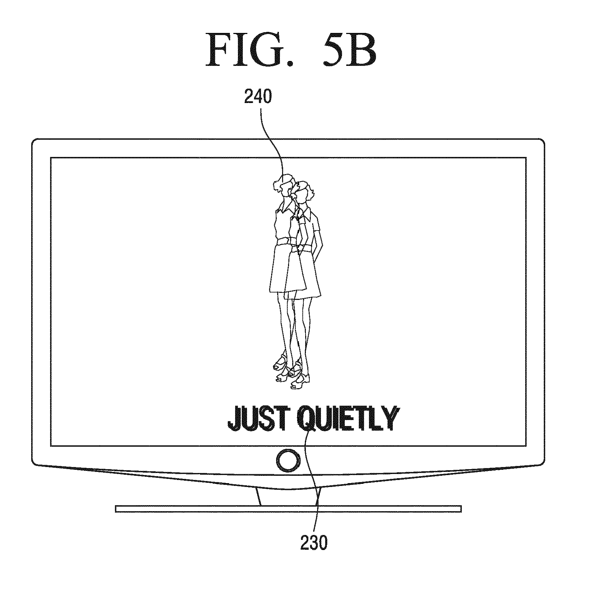

FIGS. 4A and 4B show an output or display state of the 3D display apparatus 100 (or an external display unit) when the loudness of the phonated voice exceeds the predetermined critical range, and FIGS. 5A and 5B show an output state of the 3D display apparatus 100 when the loudness of the phonated voice is under the predetermined critical range.

When the loudness of the phonated voice exceeds the predetermined critical range, as shown in FIG. 4A, a subtitle 'Fire!' 220 can be recognized by the user as being displayed closer to her or him than an object 210 forming content. This is because, as shown in FIG. 4B, a disparity between a left eye image and a right eye image of a 3D subtitle image 'Fire!' 220 is set to be larger than that between a left eye image and a right eye image of a 3D content image 210.

When the loudness of the phonated voice is under the predetermined critical range, as shown in FIG. 5A, a subtitle 'Just quietly' 230 can be recognized by the user as being displayed farther away from her or him than an object 240 forming a content. This is because as shown in FIG. 5B, a disparity between a left eye image and a right eye image of a 3D subtitle image 'Just quietly' 230 is set to be smaller than that between a left eye image and a right eye image of a 3D content image 240.

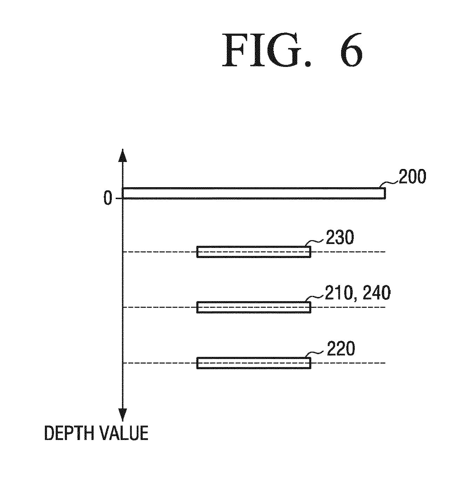

FIG. 6 is a top plan view of the 3D display apparatus 100 shown in FIGS. 4A and 5A.

That is, as shown in FIG. 6, since the 3D subtitle images 220 and 230 having depth information different from those of the objects 210 and 240 forming the contents are outputted being overlapped on the 3D content images, respectively, it can be appreciated that the larger the depth information of the subtitle is, that is, the more the subtitle corresponds to the voice signal in which the loudness level is larger in the audio signal, the closer it is seen by the user that watches the 3D display apparatus 100.

Accordingly, the users can adjust 3D effects of the subtitles corresponding to the phonated voices where the objects on the screen phonate according to the loudnesses thereof, thereby watching more dynamic stereoscopic images.

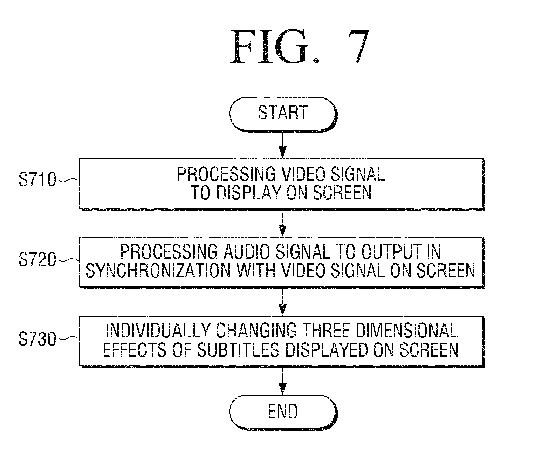

FIG. 7 is a flowchart for explaining a content displaying method of a 3D display apparatus according to an exemplary embodiment.

Referring to FIG. 7, a video signal included in a content signal is processed to be displayed on a screen (operation S710).

Furthermore, an audio signal included in the content signal is processed to be output in synchronization with the video signal on the screen (operation S720).

Moreover, 3D effects of subtitles displayed on the screen are individually changed or controlled according to loudness levels of the audio signal (operation S730).

In this case, in operation S730, if a loudness of a phonated voice in the audio signal exceeds a predetermined critical range, depth information of a subtitle corresponding to a phonated content may be adaptively increased according to a difference between the loudness of the phonated voice and the predetermined critical range, and if under the predetermined critical range, the depth information of the subtitle corresponding to the phonated content may be adaptively decreased according to the difference between the loudness of the phonated voice and the predetermined critical range.

Also, in operation S710, an object having a predetermined 3D effect may be displayed on the screen, and if a loudness of a phonated voice where the object phonates is in the predetermined critical range, a subtitle for the phonated voice where the object phonates may be displayed along with the object in the same 3D effect as that of the object on the screen.

On the other hand, in operation S730, if the loudness of the phonated voice in the audio signal exceeds the predetermined critical range, the depth information of the subtitle corresponding to the phonated content may be increased at a predetermined maximum value, and if under the predetermined critical range, the depth information of the subtitle corresponding to the phonated content may be decreased at a predetermined minimum value.

Also, in operation S710, if a plurality of objects having different 3D effects is displayed in one screen, 3D effects of subtitles corresponding to phonated voices where the objects phonate, respectively, may be displayed to be different, depending on the 3D effects of the respective objects.

It is understood that the method as described above may be performed by the 3D display apparatus according to above-described exemplary embodiments or other display apparatuses not having all components of the 3D display apparatus according to the above-described exemplary embodiments.

Further, one or more exemplary embodiments may include a computer-readable recording medium including a program for running the content displaying method of the 3D display apparatus as described above. The computer-readable recording medium includes all sorts of recording apparatuses in which data being readable by a computer system is stored. As examples of the computer-readable recording medium, there are a ROM, a RAM, a CD-ROM, a magnetic tape, a floppy disk, an optical data storing apparatus, etc. Further, computer-readable recording media may be distributed in computer systems connected through a network, so that it can store and execute codes, which are readable in a distributed method by the computer. Moreover, one or more units of the above-described apparatus may include a processor, a microprocessor, other circuitry, etc.

Although the present inventive concept has been explained by the above-described exemplary embodiments, exemplary embodiments are not limited to the foregoing exemplary embodiments. The present teaching can be readily applied to other types of apparatuses and many alternatives, modifications, and variations will be apparent to those skilled in the art. Thus, the scope of the present inventive concept is not to be construed as being limited to the description of exemplary embodiments, and is to be construed by the attached claims.

## Claims

1. A content displaying method of a three dimensional (3D) display apparatus, the method comprising:
processing a video signal included in a content signal to be displayed on a screen;
processing an audio signal included in the content signal to be output in synchronization with the video signal on the screen; and
individually changing 3D effects of an additional image displayed on the screen according to loudness levels of the audio signal.

2. The method of claim 1, wherein the individually changing comprises, if a loudness of a phonated voice in the audio signal exceeds a predetermined critical range, adaptively increasing a depth information of the additional image corresponding to a phonated content according to a difference between the loudness of the phonated voice and the predetermined critical range, and if the loudness of the phonated voice is under the predetermined critical range, adaptively decreasing the depth information of the additional image corresponding to the phonated content according to the difference between the loudness of the phonated voice and the predetermined critical range.

3. The method of claim 2, wherein the processing the video signal comprises displaying an object having a predetermined 3D effect on the screen, and if a loudness of a phonated voice that the object phonates is in the predetermined critical range, displaying the additional image of the phonated voice that the object phonates along with the object in the same 3D effect as the predetermined 3D effect of the object on the screen.

4. The method of any of claims 1 to 3, wherein the individually changing comprises, if a loudness of a phonated voice in the audio signal exceeds a predetermined critical range, increasing a depth information of the additional image corresponding to a phonated content to a predetermined maximum value, and if the loudness of the phonated voice is under the predetermined critical range, decreasing the depth information of the additional image corresponding to the phonated content to a predetermined minimum value.

5. The method of any of claims 1 to 4, wherein the processing the video signal comprises, if a plurality of objects having different 3D effects is displayed in one screen, displaying 3D effects of additional images corresponding to phonated voices that the objects phonate, respectively, to be different, depending on the 3D effects of the respective objects.

6. A 3D display apparatus, comprising:
an image processing unit to process a video signal and an audio signal included in a content signal;
an output unit to display the processed video signal on a screen and to output the processed audio signal;
a control unit to control the output unit to output the audio signal in synchronization with the video signal on the screen and to individually change 3D effects of additional images displayed on the screen according to loudness levels of the audio signal.

7. The apparatus of claim 6, wherein if a loudness of a phonated voice in the audio signal exceeds a predetermined critical range, the control unit adaptively increases a depth information of the additional images corresponding to a phonated content according to a difference between the loudness of the phonated voice and the predetermined critical range, and if the loudness of the phonated voice is under the predetermined critical range, adaptively decreases the depth information of the additional image corresponding to the phonated content according to the difference between the loudness of the phonated voice and the predetermined critical range.

8. The apparatus of claim 7, wherein the control unit controls to display an object having a predetermined 3D effect on the screen, and to, if a loudness of a phonated voice that the object phonates is in the predetermined critical range, display the additional image of the phonated voice that the object phonates along with the object in the same 3D effect as the predetermined 3D effect of the object on the screen.

9. The apparatus of any of claims 6 to 8, wherein if a loudness of a phonated voice in the audio signal exceeds a predetermined critical range, the control unit increases a depth information of the additional image corresponding to a phonated content to a predetermined maximum value and if the loudness of the phonated voice is under the predetermined critical range, decreases the depth information of the additional image corresponding to the phonated content to a predetermined minimum value.

10. The apparatus of any of claims 6 to 9, wherein if a plurality of objects having different 3D effects is displayed in one screen, the control unit controls to display 3D effects of additional images corresponding to phonated voices that the objects phonate, respectively, to be different, depending on the 3D effects of the respective objects.

11. A content processing method of a three dimensional (3D) image processing apparatus, the method comprising:
determining a characteristic of an audio signal; and
individually controlling a 3D effect of an additional imageto be displayed according to the determined characteristic of the audio signal.

12. The method of claim 11, wherein the characteristic of the audio signal is a loudness level of the audio signal.

13. The method of claim 11, wherein the individually controlling comprises:
if a characteristic value of a phonated content in the audio signal exceeds a predetermined critical range, adaptively increasing a depth information of the additional image corresponding to the phonated content according to a difference between the characteristic value of the phonated content and the predetermined critical range; and
if the characteristic value of the phonated content is under the predetermined critical range, adaptively decreasing the depth information of the additional image corresponding to the phonated content according to the difference between the characteristic of the phonated content and the predetermined critical range.

14. The method of claim 13, further comprising:
determining a 3D effect of an object of a frame; and
the individually controlling comprises, if a characteristic value of a phonated content that the object phonates is in the predetermined critical range, outputting an additional image of the phonated content that the object phonates with a same 3D effect as the determined 3D effect of the object.

15. A computer-readable recording medium having recorded thereon a program executable to perform the method of claim 11.
